# EUROPEAN PATENT SPECIFICATION

(11) **EP 2 363 936 B1**
(45) Date of publication and mention of the grant of the patent: **27.05.2015**
(21) Application number: 11155744.3
(22) Date of filing: 24.02.2011
(51) Int. Cl.: H02J 7/00, H02J 9/06, H02H 11/00, H01M 10/44, H01M 10/48

(54) **Reverse connection protecting device and backup power supply comprising the same**
Vorrichtung zum Schutz gegen umgekehrten Anschluss und Notstromversorgung damit
Dispositif de protection de connexion inverse et alimentation électrique de secours le comprenant

(30) Priority: 27.02.2010 CN 201020122605 U
(43) Date of publication of application: 07.09.2011
(73) Proprietor: Byd Company Limited, Shenzhen 518118 (CN)
(72) Inventor: Pan, Qiuping, Shenzhen 518118 (CN); Zheng, Qingfei, Shenzhen 518118 (CN); Dai, Xiangjun, Shenzhen 518118 (CN)
(74) Representative: Gulde & Partner

(56) References cited:
- EP-A2- 1 137 145
- WO-A1-91/15046
- CN-Y- 201 270 416
- CN-Y- 201 349 143
- US-A1- 2007 262 651

## Description

The present application claims priority to and benefits of the Chinese Patent Application with the publication number CN 2011639290 U, filed with the State Intellectual Property Office of the People's Republic of China (SIPO) on Feb. 27, 2010.

### FIELD

The disclosure relates to a power supply, more particularly to a reverse connection protecting device and a backup power supply comprising the same.

### BACKGROUND

A continuous power supply is very important for many types of electronic equipments such as communication systems, internet servers, etc. When a power supply interruption occurs, a backup power supply has to be activated for protecting the circuit of the used electronic equipments. Therefore, the power supply for protecting the circuit is very important. Conventionally, a high-voltage reverse connection protecting diode, a transient voltage suppressor (TVS) or a fuse is used for protecting the circuit when the power supply is reversely connected. However, if the fuse is broken, it must be replaced. Therefore, the maintenance is inconvenient.

Conventional backup power supply devices are known from CN 201 349 143 Y, US 2007/262651 A1 and EP 1 137 145 A2.

### SUMMARY

According to an embodiment of the present disclosure, a reverse connection protecting device for a backup power supply is provided, comprising: a charging and discharging interface defining first and second lead-in ends, and first and second lead-out ends corresponding to the first and second lead-in ends respectively, in which the second lead-in end is coupled to a negative terminal of a secondary battery of the backup power supply, and the second lead-out end is coupled to a negative terminal of a load and a negative terminal of an external power supply; a battery control module coupled to the first lead-in end of the charging and discharging interface and coupled to a positive terminal of the secondary battery for controlling the charging or discharging of the secondary battery; a switch unit coupled between the first lead-out end of the charging and discharging interface and the positive terminal of the load as well as the positive terminal of the external power supply; a switch control module coupled to the switch unit for controlling the switch unit according to voltages of the first and second lead-out ends of the charging and discharging interface; and an activation module coupled to the battery control module, the load and the external power supply respectively for activating the battery control module after the external power supply is powered on and for disconnecting the battery control module when any one of the load, the secondary battery and the external power supply is reversely connected.

According to another embodiment of the present disclosure, a backup power supply is provided, comprising: a secondary battery and a reverse connection protecting device. The reverse connection protecting device comprises: a charging and discharging interface defining first and second lead-in ends, and first and second lead-out ends corresponding to the first and second lead-in ends respectively, in which the second lead-in end is coupled to a negative terminal of a secondary battery, and the second lead-out end is coupled to a negative terminal of a load and a negative terminal of an external power supply; a battery control module coupled to the first lead-in end of the charging and discharging interface and coupled to the positive terminal of the secondary battery for controlling the charging or discharging of the secondary battery; a switch unit coupled between the first lead-out end of the charging and discharging interface and the positive terminal of the load as well as the positive terminal of the external power supply; a switch control module coupled to the switch unit for controlling the switch unit according to voltages of the first and second lead-out ends of the charging and discharging interface; and an activation module coupled to the battery control module, the load and the external power supply respectively for activating the battery control module after the external power supply is powered on and for being disconnected when any one of the load, the secondary battery and the external power supply is reversely connected.

With the embodiments of the present disclosure, the secondary battery, the battery control module, the charging and discharging interface, the external power supply and the load constitute a main charging and discharging circuit. The battery control module may be activated by the activation module independent of the main charging and discharging circuit, and whether the main charging and discharging circuit is inversely connected is determined by the switch control module according to the voltage output from the charging and discharging interface, so as to control the turning on and turning off of the main circuit of the backup power supply by the switch unit, thus controlling turning on and turning off of the secondary battery and the main charging and discharging circuit. When the main charging and discharging circuit is inversely connected, the main charging and discharging circuit is turned off, thus preventing the inverse connection of the main charging and discharging circuit (that is, at least one of the secondary battery, the external power supply and the load is inversely connected). The reverse connection protecting device and the backup power supply having the same according to embodiments of the present disclosure are simple in structure and low in cost.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings in which:
Fig. 1 is a structural diagram of a backup power supply according to an embodiment of the present disclosure;
Fig. 2 is a preferred principle diagram of a backup power supply according to another embodiment of the present disclosure; and
Fig. 3 is a detailed circuit principle diagram of the battery control module shown in Fig. 2.

### DETAILED DESCRIPTION

Reference will be made in detail to embodiments of the present disclosure. The embodiments described herein with reference to the accompanying drawings are explanatory and illustrative, which are used to generally interpret the present disclosure. The embodiments shall not be construed to limit the present disclosure. The same or similar elements and the elements having same or similar functions are denoted by like reference numerals throughout the description.

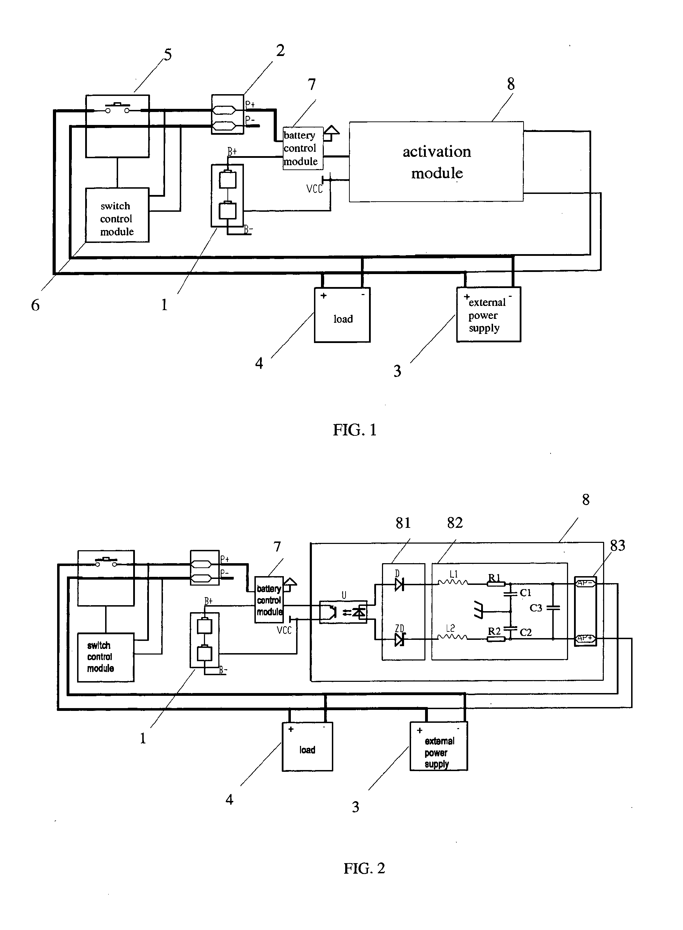

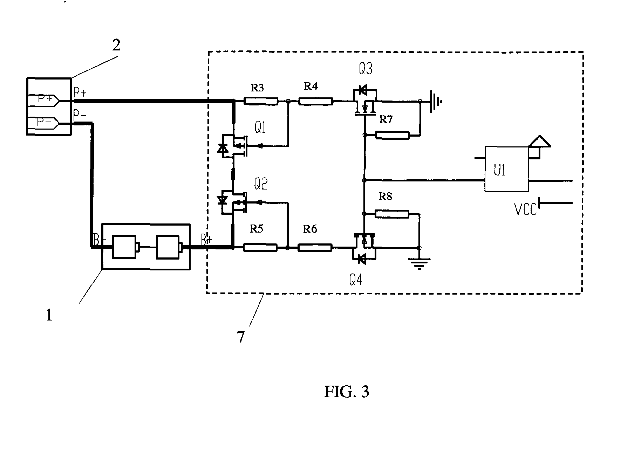

Referring to Figs. 1-3, Fig. 1 is a structural diagram of a backup power supply according to an embodiment of the present disclosure; Fig. 2 is a preferred principle diagram of a backup power supply according to another embodiment of the present disclosure; and Fig. 3 is a detailed circuit principle diagram of the battery control module shown in Fig. 2.

As shown in Figs.1 to 3, in some embodiments, a reverse connection protecting device may be used in electronic devices having a backup power supply. The electronic equipments may be powered by the external power supply or the backup power supply.

In one embodiment, a reverse connection protecting device comprises a charging and discharging interface 2 for the charging or discharging of the secondary battery 1, a battery control module 7 for controlling the charging or discharging of the secondary battery 1, an activation module 8 for activating the battery control module 7, a switch unit 5, and a switch control module 6 coupled to the switch unit 5. The charging and discharging interface 2 comprises first and second lead-in ends, and first and second lead-out ends corresponding to the first and second lead-in ends respectively, in which the second lead-in end is coupled to the negative terminal (B-) of the secondary battery 1, and the second lead-out end is coupled to a negative terminal of a load 4 and a negative terminal of an external power supply 3. The battery control module 7 is coupled to the first lead-in end of the charging and discharging interface 2 and the positive terminal (B+) of the secondary battery 1 for controlling the charging or discharging of the secondary battery 1. The switch unit 5 is coupled between the first lead-out end of the charging and discharging interface 2 and the positive terminal of the load 4 as well as the positive terminal of the external power supply 3. The switch control module 6 is coupled to the switch unit 5 for controlling the switch unit 5 according to voltages of the first and second lead-out ends of the charging and discharging interface 2. The switch control module 6 determines whether to switch on the switch unit 5 according to the voltages of the first and second lead-out ends of the charging and discharging interface 2. The activation module 8 is coupled to the battery control module 7, the load 4 and the external power supply 3 respectively for activating the battery control module 7 after the external power supply 3 is powered on and for being turned off when any one of the load 4, the secondary battery 1 and the external power supply 3 is reversely connected.

In embodiments of the present disclosure, the secondary battery 1, the battery control module 7, the charging and discharging interface 2, the external power supply 3 and the load 4 constitute the main charging and discharging circuit.

As shown in Figs. 2-3, the charging and discharging interface 2 may be a four-terminal interface comprising two lead-in ends and two lead-out ends. The switch unit 5 may be a normally open switch.

As shown in Fig. 2, the activation module 8 comprises an activation terminal 83, a lightning protection circuit 82, a voltage stabilizing and reverse connection protecting circuit 81 and an optical coupler U. The activation terminal 83 is adapted to couple to the load 4 and the external power supply 3 respectively. The lightning protection circuit 82 is coupled to the activation terminal 83. The voltage stabilizing and reverse connection protecting circuit 81 is coupled to the lightning protection circuit 82 and to be disconnected when any one of the load 4, the secondary battery 1 and the external power supply 3 is reversely connected. First and second input ends of the optical coupler U are coupled to the voltage stabilizing and reverse connection protecting circuit 81 respectively, and an output end of the optical coupler U is coupled to the battery control module 7.

In one embodiment, the activation terminal 83 is an anti-mistake activation terminal.

In one embodiment, the lightning protection circuit 82 comprises a first capacitor C1, a second capacitor C2, a first current-limiting resistor R8, a second current-limiting resistor R9, a first magnetic bead L1 and a second magnetic bead L2. One end of the first capacitor C1 is coupled to one end of the activation terminal 83. The second capacitor C2 is connected to the first capacitor C1 in series, one end of the second capacitor C2 is coupled to the other end of the activation terminal 83, and the connection point between the first capacitor C1 and the second capacitor C2 is grounded. One end of the first current-limiting resistor R8 is coupled to the one end of the activation terminal 83, and one end of the second current-limiting resistor R9 is coupled to the other end of the activation terminal 83. The first magnetic bead L1 is coupled to the other end of the first current-limiting resistor R8, and the second magnetic bead L2 is coupled to the other end of the second current-limiting resistor R9.

In one embodiment, the lightning protection circuit 82 further comprises a third capacitor C3 in parallel connected to the in series connected first and second capacitors C1, C2.

In one embodiment, the voltage stabilizing and reverse connection protecting circuit 81 comprises a first diode D having a cathode coupled to the first magnetic bead L1 of the lightning protection circuit 82 and an anode coupled to the first input end of the optical coupler U.

In one embodiment, the voltage stabilizing and reverse connection protecting circuit 81 further comprises a zener diode ZD having an anode coupled to the second input end of the optical coupler U and a cathode coupled to the second magnetic bead L2 of the lightning protection circuit 82.

The battery control module 7 comprises a first field effect transistor (FET) Q1, a second field effect transistor Q2, in series connected third resistor R3 and fourth resistor R4, in series connected fifth resistor R5 and sixth resistor R6, a third field effect transistor Q3, a fourth field effect transistor Q4 and a single chip microcomputer U1. The source of the first field effect transistor Q1 is coupled to the first lead-in end of the charging and discharging interface 2. The drain of the second field effect transistor Q2 is coupled to the drain of the first field effect transistor Q1, and the source of the second field effect transistor Q2 is coupled to the positive terminal of the secondary battery 1. A terminal of the third resistor R3 is coupled to the first lead-in end of the charging and discharging interface 2, and the connection point of the third resistor R3 and the fourth resistor R4 is coupled to the gate of the first field effect transistor Q1. A terminal of the fifth resistor R5 is coupled to the positive terminal of the secondary battery 1, and the connection point of the fifth resistor R5 and the sixth resistor R6 is coupled to the gate of the second field effect transistor Q2. The source of the third field effect transistor Q3 is coupled to a terminal of the fourth resistor R4, and the drain of the third field effect transistor Q3 is grounded. The source of the fourth field effect transistor Q4 is coupled to a terminal of the sixth resistor R6, and the drain of the fourth field effect transistor Q4 is grounded. An input terminal of the single chip microcomputer U1 is coupled to the activation module 8, and an output terminal of the single chip microcomputer U1 is coupled to the gates of the third field effect transistor Q3 and the fourth field effect transistor Q4 respectively.

In one embodiment, the battery control module 7 further comprises: a seventh resistor R7 coupled between the drain and the gate of the third field effect transistor Q3; and an eighth resistor R8 coupled between the drain and the gate of the fourth field effect transistor Q4.

In one embodiment, the battery control module 7 further comprises third to sixth diodes in inverse parallel connection to the first field effect transistor Q1, the second field effect transistor Q2, the third field effect transistor Q3 and the fourth field effect transistor Q4 respectively.

In one embodiment, the first field effect transistor Q1 and second field effect transistor Q2 are P-type, and the third field effect transistor Q3 and fourth field effect transistor Q4 are N-type.

A backup power supply according to an embodiment of the present disclosure comprises the secondary battery 1 and the reverse connection protecting device described above.

The following provides detailed principle of the reverse connection protecting device in conjunction with the above embodiment of the present disclosure.

In practice, for various reasons, the load may be inversely connected, the external power supply may be inversely connected, or the charging and discharging interface may be inversely connected, which may cause the main charging and discharging circuit to be inversely connected, thus destroying the whole circuit. The backup power supply such as the secondary battery 1 does not supply power at normal conditions, so that it needs to be activated for being charged or discharged when it is connected into the circuit. After the activation module 8 is powered on by the external power supply 3, an electric signal may be transmitted from the activation terminal 83, the lightning protection circuit 82, the voltage stabilizing and reverse connection protecting circuit 81 in turn to the optical coupler U and then may be output from the optical coupler U so as to drive the battery control module 7. The single chip microcomputer U1 in the battery control module 7 may control the secondary battery and the main charging and discharging circuit to turn on or turn off. For example, when the electric quantity of the secondary battery 1 is insufficient because the secondary battery 1 is overcharged or over-discharged, the FETs in the battery control module 7 may be open such that the connection of the secondary battery 1 and the charging and discharging interface 2 may be broken. When the single chip microcomputer U1 is turned on, the four FETs are switched on in turn to turn the main charging and discharging circuit on so as to charge or discharge the secondary battery 1.

The switch control module 6 comprises a sampling circuit configured to sample voltage signals, and a control chip configured to detect the sampled voltage signals from the sampling circuit and provide a control signal to the switch unit 5. When the detected voltage meets a specific requirement, the control chip controls the switch unit 5 to switch on so as to switch the main charging and discharging circuit on. When the main charging and discharging circuit is not inversely connected, the detected voltage is positive, and the switch control module 6 controls the switch unit 5 to switch on; whereas when the main charging and discharging circuit is inversely connected, the detected voltage is negative, the switch control module 6 controls the switch unit 5 to switch off, and the secondary battery 1 is not connected to a subsequent circuit, thus avoiding the danger.

In one embodiment, the first magnetic bead L1 and the second magnetic bead L2 may prevent the static electricity of the terminals. The first current-limiting resistor R8 and the second current-limiting resistor R9 may limit the current of the activation circuit and the current impact during a lightning stroke. The first capacitor C1 and the second capacitor C2 may release the static electricity and the common-mode lightning current. The third capacitor C3 may release the static electricity and the differential-mode lightning current. If the activation terminal 83 is inversely connected, the first diode D in the voltage stabilizing and reverse connection protecting circuit 81 will not be turned on, and thus the first diode D in the voltage stabilizing and reverse connection protecting circuit 81 may prevent the damage to the inner circuit resulted from the inverse connection of the positive terminal and the negative terminal of the activation terminal 83. The zener diode ZD in the voltage stabilizing and reverse connection protecting circuit 81 may avoid the repetitive starting of the activation module 8 when the voltage of the external power supply 3 is low or instable. When the voltage of the external power supply 3 does not reach a voltage stabilizing value of the zener diode ZD, the activation circuit is not turned on, and the battery control module 7 is not activated, and thus the secondary battery 1 may not be turned on.

The optical coupler U not only may be used as a switch between the activation module 8 and the secondary battery 1, but also may separate the secondary battery 1 from the external power supply 3 to avoid the negative effects on the interior control system caused by the different electrical levels. Particularly, the activation terminal 83 may be an anti-mistake activation terminal. The secondary battery 1 is a nickel-hydrogen battery, a nickel-cadmium battery, or a lithium-ion battery.

With the reverse connection protecting device for a backup power supply according to an embodiment of the present disclosure, the battery control module may be activated by the activation module separate from the main charging and discharging circuit, and it is determined whether the main charging and discharging circuit is inversely connected by the switch control module on the main charging and discharging circuit according to the voltage output from the charging and discharging interface, to control the turn-on and turn-off states of the whole main circuit by the switch unit, thus controlling the turning-on and turning-off of the secondary battery and the main charging and discharging circuit. Moreover, when the main charging and discharging circuit is inversely connected, the secondary battery and the main charging and discharging circuit are turned off to avoid the danger, thus effectively preventing the inverse connection of the secondary battery and the main charging and discharging circuit. The reverse connection protecting device according to an embodiment of the present disclosure is simple in structure and low in cost.

## Claims

1. A reverse connection protecting device for a backup power supply, comprising:
a charging and discharging interface (2) comprising first and second lead-in ends, and first and second lead-out ends corresponding to the first and second lead-in ends respectively, in which the second lead-in end is coupled to a negative terminal of a secondary battery (1) of the backup power supply, and the second lead-out end is coupled to a negative terminal of a load (4) and an negative terminal of an external power supply (3);
a battery control module (7) coupled to the first lead-in end of the charging and discharging interface (2) and coupled to the positive terminal of the secondary battery (1) for controlling the charging or discharging of the secondary battery (1);
a switch unit (5) coupled between the first lead-out end of the charging and discharging interface (2) and the positive terminal of the load (4) as well as the positive terminal of the external power supply (3);
a switch control module (6) coupled to the switch unit (5) for controlling the switch unit (5) according to voltages of the first and second lead-out ends of the charging and discharging interface (2); and
an activation module (8) coupled to the battery control module (7), the load (4) and the external power supply (3) respectively for activating the battery control module (7) after the external power supply (3) is powered on and for being disconnected when any one of the load (4), the secondary battery (1) and the external power supply (3) is reversely connected.

2. The reverse connection protecting device of claim 1, wherein the activation module (8) comprises:
an activation terminal (83) coupled to the load (4) and the external power supply (3) respectively;
a lightning protection circuit (82) coupled to the activation terminal (83);
a voltage stabilizing and reverse connection protecting circuit (81) coupled to the lightning protection circuit (82) and adapted to be disconnected when any one of the load (4), the secondary battery (1) and the external power supply (3) is reversely connected; and
an optical coupler comprising first and second input ends coupled to the voltage stabilizing and reverse connection protecting circuit (81) respectively and an output end coupled to the battery control module (7).

3. The reverse connection protecting device of claim 2, wherein the activation terminal (83) is an anti-mistake activation terminal.

4. The reverse connection protecting device according to any one of claims 2 and 3, wherein the lightning protection circuit (82) comprises:
a first capacitor having one end coupled to one end of the activation terminal (83);
a second capacitor connected to the first capacitor in series and having one end coupled to the other end of the activation terminal (83), in which the connection point between the first capacitor and the second capacitor is grounded;
a first current-limiting resistor having one end coupled to the one end of the activation terminal (83);
a second current-limiting resistor having one end coupled to the other end of the activation terminal (83);
a first magnetic bead coupled to the other end of the first current-limiting resistor; and
a second magnetic bead coupled to the other end of the second current-limiting resistor.

5. The reverse connection protecting device of claim 4, wherein the lightning protection circuit (82) further comprises:
a third capacitor in parallel connected to the in series connected first and second capacitors.

6. The reverse connection protecting device according to any one of claims 4 and 5, wherein the voltage stabilizing and reverse connection protecting circuit (81) comprises:
a first diode having a cathode coupled to the first magnetic bead of the lightning protection circuit (82) and an anode coupled to the first input end of the optical coupler.

7. The reverse connection protecting device of claim 6, wherein the voltage stabilizing and reverse connection protecting circuit (81) further comprises:
a zener diode having an anode coupled to the second input end of the optical coupler and a cathode coupled to the second magnetic bead of the lightning protection circuit (82).

8. The reverse connection protecting device according to any one of the preceding claims, wherein the battery control module (7) comprises:
a first field effect transistor having a source coupled to the first lead-in end of the charging and discharging interface (2);
a second field effect transistor having a drain coupled to the drain of the first field effect transistor and a source coupled to the positive terminal of the secondary battery (1);
in series connected third and fourth resistors, in which a terminal of the third resistor is coupled to the first lead-in end of the charging and discharging interface (2), and the connection point of the third and fourth resistors is coupled to the gate of the first field effect transistor;
in series connected fifth and sixth resistors, in which a terminal of the fifth resistor is coupled to the positive terminal of the secondary battery (1), and the connection point of the fifth and sixth resistors is coupled to the gate of the second field effect transistor;
a third field effect transistor having a source coupled to a terminal of the fourth resistor and a drain grounded;
a fourth field effect transistor having a source coupled to a terminal of the sixth resistor and a drain grounded; and
a single chip microcomputer having an input terminal coupled to the activation module (8) and an output terminal coupled to the gates of the third and fourth field effect transistors respectively.

9. The reverse connection protecting device of claim 8, wherein the first field effect transistor and second field effect transistor are P-type, and the third field effect transistor and fourth field effect transistor are N-type.

10. The reverse connection protecting device according to any one of claims 8 and 9, wherein the battery control module (7) further comprises:
a seventh resistor coupled between the drain and the gate of the third field effect transistor; and
an eighth resistor coupled between the drain and the gate of the fourth field effect transistor.

11. The reverse connection protecting device according to any one of claims 8 to 10, wherein the battery control module (7) further comprises:
third to sixth diodes in inverse parallel connection to the first to fourth field effect transistors respectively.

12. A backup power supply, comprising:
a secondary battery (1); and
a reverse connection protecting device according to any of claims 1 to 11.

13. The backup power supply of claim 12, wherein the secondary battery (1) is a nickel-hydrogen battery, a nickel-cadmium battery, or a lithium-ion battery.

## Patentansprüche

1. Vorrichtung zum Schutz gegen umgekehrten Anschluss für eine Notstromversorgung, aufweisend:
eine Lade- und Entladeschnittstelle (2), die ein erstes und zweites Einführende und ein erstes und zweites Ausführende, die jeweils mit dem ersten und zweiten Einführende korrespondieren, aufweist, wobei das zweite Einführende mit einem negativen Anschluss einer Sekundärbatteiie (1) der Notstromversorgung gekoppelt ist und das zweite Ausführende mit einem negativen Anschluss einer Last (4) und einem negativen Anschluss einer externen Stromversorgung (3) gekoppelt ist;
ein Batteiiesteuermodul (7), das mit dem ersten Einführende der Lade- und Entladeschnittstelle (2) gekoppelt ist und mit dem positiven Anschluss der Sekundärbatteiie (1) gekoppelt ist, um das Laden oder Entladen der Sekundärbatteiie (1) zu steuern;
eine Schalteinheit (5), die zwischen das erste Ausführende der Lade- und Entladeschnittstelle (2) und den positiven Anschluss der Last (4) sowie den positiven Anschluss der externen Stromversorgung (3) gekoppelt ist;
ein Schaltsteuermodul (6), das mit der Schalteinheit (5) gekoppelt ist, um die Schalteinheit (5) gemäß Spannungen des ersten und zweiten Ausführendes der Lade- und Entladeschnittstelle (2) zu steuern; und
ein Aktivierungsmodul (8), das jeweils mit dem Batteiiesteuermodul (7), der Last (4) und der externen Stromversorgung (3) gekoppelt ist, um nach dem Einschalten der externen Stromversorgung (3) das Batteiiesteuermodul (7) zu aktivieren, und um getrennt zu werden, wenn eine der Last (4), der Sekundärbatteiie (1) und der externen Stromversorgung (3) umgekehrt angeschlossen wird.

2. Voriichtung zum Schutz gegen umgekehrten Anschluss nach Anspruch 1, wobei das Aktivierungsmodul (8) aufweist:
einen Aktivierungsanschluss (83), der jeweils mit der Last (4) und der externen Stromversorgung (3) gekoppelt ist;
eine Blitzschutzschaltung (82), die mit dem Aktivierungsanschluss (83) gekoppelt ist;
eine Schaltung (81) zum Stabilisieren von Spannung und zum Schutz gegen umcekehiten Anschluss, die mit der Blitzschutzschaltung (82) gekoppelt ist und angepasst ist, um getrennt zu werden, wenn eine der Last (4), der Sekundärbatteiie (1) und der externen Stromversorgung (3) umgekehrt angeschlossen wird; und
einen optischen Koppler, der ein erstes und zweites Eingangsende, die jeweils mit der Schaltung (81) zum Stabilisieren von Spannung und zum Schutz gegen umcekehiten Anschluss gekoppelt sind, und ein Ausgangsende, das mit dem Batteriesteueimodul (7) gekoppelt ist, aufweist.

3. Vomichtung zum Schutz gegen umgekehrten Anschluss nach Anspruch 2, wobei der Aktivierungsanschluss (83) ein Fehlerschutz-Aktivierungsanschluss ist.

4. V onichtung zum Schutz gegen umgekehrten Anschluss nach einem der Ansprüche 2 und 3, wobei die Blitzschutzschaltung (82) aufweist:
einen ersten Kondensator, der ein Ende aufweist, das mit einem Ende des Aktivierungsanschlusses (83) gekoppelt ist;
einen zweiten Kondensator, der mit dem ersten Kondensator in Reihe geschaltet ist und ein Ende aufweist, das mit dem anderen Ende des Aktivierungsanschlusses (83) gekoppelt ist, wobei der Anschlusspunkt zwischen dem ersten Kondensator und dem zweiten Kondensator geerdet ist;
einen ersten Strombegrenzungswiderstand, der ein Ende aufweist, das mit dem einen Ende des Aktivierungsanschlusses (83) gekoppelt ist;
einen zweiten Strombegrenzungswiderstand, der ein Ende aufweist, das mit dem anderen Ende des Aktivierungsanschlusses (83) gekoppelt ist;
ein erstes magnetisches Bead, das mit dem anderen Ende des ersten Strombegrenzungswiderstands gekoppelt ist; und
ein zweites magnetisches Bead, das mit dem anderen Ende des zweiten Strombegrenzungswiderstands gekoppelt ist.

5. Voriichtung zum Schutz gegen umgekehrten Anschluss nach Anspruch 4, wobei die Blitzschutzschaltung (82) weiterhin aufweist:
einen dritten Kondensator, der mit dem in Reihe geschalteten ersten und zweiten Kondensator parallel geschaltet ist.

6. Voriichtung zum Schutz gegen umgekehrten Anschluss nach einem der Ansprüche 4 und 5, wobei die Schaltung (81) zum Stabilisieren von Spannung und zum Schutz gegen umcekehiten Anschluss aufweist:
eine erste Diode, die eine Kathode, die mit dem ersten magnetischen Bead der Blitzschutzschaltung (82) gekoppelt ist, und eine Anode, die mit dem ersten Eingangsende des optischen Kopplers gekoppelt ist, aufweist.

7. Vorrichtung zum Schutz gegen umgekehrten Anschluss nach Anspruch 6, wobei die Schaltung (81) zum Stabilisieren von Spannung und zum Schutz gegen umgekehrten Anschluss weiterhin aufweist:
eine Zenerdiode, die eine Anode, die mit dem zweiten Eingangsende des optischen Kopplers gekoppelt ist, und eine Kathode, die mit dem zweiten magnetischen Bead der Blitzschutzschaltung (82) gekoppelt ist, aufweist.

8. Vomichtung zum Schutz gegen umgekehrten Anschluss nach einem der vorhergehenden Ansprüche, wobei das Batteriesteuermodul (7) aufweist:
einen ersten Feldeffekttransistor, der eine Source aufweist, die mit dem ersten Einführende der Lade- und Entladeschnittstelle (2) gekoppelt ist;
einen zweiten Feldeffekttransistor, der ein Drain, das mit dem Drain des ersten Feldeffekttransistors gekoppelt ist, und eine Source, die mit dem positiven Anschluss der Sekundärbatteiie (1) gekoppelt ist, aufweist:
einen in Reihe geschalteten dritten und vierten Widerstand, wobei ein Anschluss des dritten Widerstands mit dem ersten Einführende der Lade- und Entladeschnittstelle (2) gekoppelt ist, und wobei der Anschlusspunkt des dritten und vierten Widerstands mit dem Gate des ersten Feldeffekttransistors gekoppelt ist;
einen in Reihe geschalteten fünften und sechsten Widerstand, wobei ein Anschluss des fünften Widerstands mit dem positiven Anschluss der Sekundärbatterie (1) gekoppelt ist, und wobei der Anschlusspunkt des fünften und sechsten Widerstands mit dem Gate des zweiten Feldeffekttransistors gekoppelt ist;
einen dritten Feldeffekttransistor, der eine Source, die mit einem Anschluss des vierten Widerstands gekoppelt ist, und ein geerdetes Drain aufweist;
einen vierten Feldeffekttransistor, der eine Source, die mit einem Anschluss des sechsten Widerstands gekoppelt ist, und ein geerdetes Drain aufweist; und
einen Einchip-Mikrorechner, der einen Eingangsanschluss, der mit dem Aktivierungsmodul (8) gekoppelt ist, und einen Ausgangsanschluss, der jeweils mit dem Gate des dritten und vierten Feldeffekttransistors gekoppelt ist, aufweist.

9. Voriichtung zum Schutz gegen umgekehrten Anschluss nach Anspruch 8, wobei der erste Feldeffekttransistor und der zweite Feldeffekttransistor vom P-Typ sind und der dritte Feldeffekttransistor und der vierte Feldeffekttransistor vom N-Typ sind.

10. Voriichtung zum Schutz gegen umgekehrten Anschluss nach einem der Ansprüche 8 und 9, wobei das Batteriesteuermodul (7) weiterhin aufweist:
einen siebten Widerstand, der zwischen das Drain und das Gate des dritten Feldeffekttransistors gekoppelt ist; und
einen achten Widerstand, der zwischen das Drain und das Gate des vierten Feldeffekttransistors gekoppelt ist.

11. Vorrichtung zum Schutz gegen umgekehrten Anschluss nach einem der Ansprüche 8 bis 10, wobei das Batteriesteuermodul (7) weiterhin aufweist:
eine dritte bis sechste Diode in Gegenparallelschaltung jeweils zum ersten bis vierten Feldeffekttransistor.

12. Notstromversorgung, aufweisend:
eine Sekundärbatterie (1); und
eine Vorrichtung zum Schutz gegen umcekehiten Anschluss nach einem der Ansprüche 1 bis 11.

13. Notstromversorgung nach Anspruch 12, wobei die Sekundärbatterie (1) eine Nickel-Wasserstoff-Batterie, eine Nickel-Cadmium-Batterie oder eine Lithiumionenbatterie ist.

## Revendications

1. Dispositif de protection de connexion inverse pour une alimentation électrique de secours, comprenant :
une interface de charge et de décharge (2) comprenant une première et une seconde extrémités d'entrée et une première et une seconde extrémités de sortie correspondant aux première et seconde extrémités d'entrée, respectivement, la seconde extrémité d'entrée étant couplée à une borne négative d'une batterie secondaire (1) de l'alimentation électrique de secours, et la seconde extrémité de sortie étant couplée à une borne négative d'une charge (4) et une borne négative d'une alimentation électrique externe (3) ;
un module de commande de batterie (7) couplé à la première extrémité d'entrée de l'interface de charge et de décharge (2) et couplé à la borne positive de la batterie secondaire (1) pour commander la charge ou la décharge de la batterie secondaire (1) ;
une unité de commutation (5) couplée entre la première extrémité de sortie de l'interface de charge et de décharge (2) et la borne positive de la charge (4) ainsi que la borne positive de l'alimentation électrique externe (3) ;
un module de commande de commutation (6) couplé à l'unité de commutation (5) pour commander l'unité de commutation (5) en fonction de tensions de la première et de la seconde extrémités de l'interface de charge et de décharge (2) ; et
un module d'activation (8) couplé au module de commande de batterie (7), la charge (4) et l'alimentation électrique externe (3), respectivement, pour activer le module de commande de batterie (7) après que l'alimentation électrique externe (3) soit activée, et pour être déconnecté si l'une quelconque de la charge (4), de la batterie secondaire (1) et de l'alimentation électrique externe (3) est connectée inversement.

2. Dispositif de protection de connexion inverse selon la revendication 1, dans lequel le module d'activation (8) comprend :
une borne d'activation (83) couplée à la charge (4) et l'alimentation électrique externe (4), respectivement ;
un circuit de protection contre la foudre (82) couplé à la borne d'activation (83) ;
un circuit de stabilisation de tension et de protection de connexion inverse (81) couplé au circuit de protection contre la foudre (82) et adapté pour être déconnecté si l'une quelconque de la charge (4), de la batterie secondaire (1) et de l'alimentation électrique externe (3) est connectée inversement ; et
un coupleur optique comprenant une première et une seconde extrémités d'entrée couplées au circuit de stabilisation de tension et de protection de connexion inverse (81), respectivement, et une extrémité de sortie couplée au module de commande de batterie (7).

3. Dispositif de protection de connexion inverse selon la revendication 2, dans lequel la borne d'activation (83) est une borne d'activation anti-défaut.

4. Dispositif de protection de connexion inverse selon l'une quelconque des revendications 2 et 3, dans lequel le circuit de protection contre la foudre (82) comprend :
un premier condensateur ayant une extrémité couplée à une extrémité de la borne d'activation (83) ;
un deuxième condensateur connecté en série au premier condensateur et ayant une extrémité couplée à l'autre extrémité de la borne d'activation (83), le point de connexion entre le premier condensateur et le deuxième condensateur étant relié à la terre ;
une première résistance de limitation de courant ayant une extrémité couplée à l'autre extrémité de la borne d'activation (83) ;
une deuxième résistance de limitation de courant ayant une extrémité couplée à l'autre extrémité de la borne d'activation (83) ;
une première bille magnétique couplée à l'autre extrémité de la première résistance de limitation de courant ; et
une deuxième bille magnétique couplée à l'autre extrémité de la deuxième résistance de limitation de courant.

5. Dispositif de protection de connexion inverse selon la revendication 4, dans lequel le circuit de protection contre la foudre (83) comprend en outre :
un troisième condensateur connecté en parallèle au premier et au deuxième condensateurs connectés en série.

6. Dispositif de protection de connexion inverse selon l'une quelconque des revendications 4 et 5, dans lequel le circuit de stabilisation de tension et de protection de connexion inverse (81) comprend :
une première diode ayant une cathode couplée à la première bille magnétique du circuit de protection contre la foudre (82) et une anode couplée à la première extrémité d'entrée du coupleur optique.

7. Dispositif de protection de connexion inverse selon la revendication 6, dans lequel le circuit de stabilisation de tension et de protection de connexion inverse (81) comprend en outre :
une diode Zener ayant une anode couplée à la seconde extrémité d'entrée du coupleur optique et une cathode couplée à la deuxième bille magnétique du circuit de protection contre la foudre (82).

8. Dispositif de protection de connexion inverse selon l'une quelconque des revendications précédentes, dans lequel le module de commande de batterie (7) comprend :
un premier transistor à effet de champ ayant une source couplée à la première extrémité d'entrée de l'interface de charge et de décharge (2) ;
un deuxième transistor à effet de champ ayant un drain couplé au drain du premier transistor à effet de champ et une source couplée à la borne positive de la batterie secondaire (1) ;
une troisième et une quatrième résistances connectées en série, une borne de la troisième résistance étant couplée à la première extrémité d'entrée de l'interface de charge et de décharge (2), et le point de connexion de la troisième et de la quatrième résistances étant couplé à la grille du premier transistor à effet de champ ;
une cinquième et une sixième résistances connectées en série, une borne de la cinquième résistance étant couplée à la borne positive de la batterie secondaire (1), et le point de connexion de la cinquième et de la sixième résistances étant couplé à la grille du deuxième transistor à effet de champ ;
un troisième transistor à effet de champ ayant une source couplée à une borne de la quatrième résistance et un drain relié à la terre ;
un quatrième transistor à effet de champ ayant une source couplée à la borne de la sixième résistance et un drain relié à la terre ; et
un micro-ordinateur monopuce ayant une extrémité d'entrée couplée au module d'activation (8) et une borne de sortie couplée aux grilles du troisième et du quatrième transistors à effet de champ, respectivement.

9. Dispositif de protection de connexion inverse selon la revendication 8, dans lequel le premier transistor à effet de champ et le deuxième transistor à effet de champ sont du type P, et le troisième transistor à effet de champ et le quatrième transistor à effet de champ sont du type N.

10. Dispositif de protection de connexion inverse selon l'une quelconque des revendications 8 et 9, dans lequel le module de commande de batterie (7) comprend en outre :
une septième résistance couplée entre le drain et la grille du troisième transistor à effet de champ ; et
une huitième résistance couplée entre le drain et la grille du quatrième transistor à effet de champ.

11. Dispositif de protection de connexion inverse selon l'une quelconque des revendications 8 à 10, dans lequel le module de commande de batterie (7) comprend en outre :
une troisième à sixième diodes connectées en anti-parallèle avec le premier au quatrième transistors à effet de champ, respectivement.

12. Alimentation électrique de secours, comprenant :
une batterie secondaire (1) ; et
un dispositif de protection de connexion inverse selon l'une quelconque des revendications 1 à 11.

13. Alimentation électrique de secours selon la revendication 12, dans laquelle la batterie secondaire (1) est une batterie nickel-hydrogène, une batterie nickel-cadmium ou une batterie lithium-ion.
